# EUROPEAN PATENT APPLICATION

(11) **EP 1 004 550 A1**
(43) Date of publication of application: **31.05.2000**
(21) Application number: 99123220.8
(22) Date of filing: 25.11.1999
(51) Int. Cl.: C03C 17/34, C03C 3/087, C03C 4/02, C03C 17/22

(54) **Heat-reflecting glass and double-glazing unit using the same**

(30) Priority: 25.11.1998 JP 33406998
(71) Applicant: Nippon Sheet Glass Co., Ltd., Osaka-shi, Osaka 541-8559 (JP)
(72) Inventor: Fujisawa, Akira, Nippon Sheet Glass Co., Ltd., Osaka-shi, Osaka (JP); Sakaguchi, Koichi, Nippon Sheet Glass Co., Ltd., Osaka-shi, Osaka (JP)
(74) Representative: HOFFMANN - EITLE

(57) **Abstract**

Heat-reflecting glasses are disclosed which have a low visible light reflectance so as not to arouse troubles such as a reflected-light nuisance to the neighborhood, have high heat-shielding properties, do not exert an adverse influence on electromagnetic wave transmittance, and have excellent durability and a greenish, bronzy or grayish color tone, a recent taste of the market. Also disclosed is a heat-reflecting double-glazing unit using any of these glasses. One of the heat-reflecting glasses comprises a glass plate and, formed on one of two main surfaces of the glass plate, at least one layer of a coating film mainly comprising silicon, has a visible light reflectance of 25% or lower when examined with the CIE standard illuminant C from the uncoated side of the glass plate, and gives a greenish reflected color tone when viewed from the uncoated side of the glass plate. The other heat-reflecting glasses comprise a glass plate and, formed over one of the two main surfaces thereof, a coating film comprising at least one layer mainly comprising silicon, have a visible light reflectance of 15% or lower when examined with the CIE standard illuminant C from the uncoated side of the glass plate, and give a bronzy or grayish reflected color tone when viewed from the uncoated side of the glass plate.

## Description

### FIELD OF THE INVENTION

The present invention relates to a heat-reflecting glass which has a low visible light reflectance and is suitable for use in windows of buildings, motor vehicles or other vehicles, and a double-glazing unit using the same.

### BACKGROUND OF THE INVENTION

Heat-reflecting glasses have recently come to be extensively used in buildings, motor vehicles and other vehicles, etc., for the purposes of reducing the load of air cooling or enabling persons irradiated with sunlight to feel less hot. Double-glazing units comprising two or more glass plates separated by an air layer and thus having enhanced heat insulating performance also have been used in windows of buildings. Furthermore, double-glazing units containing a glass plate having a coating film formed on a surface thereof for enhancing heat insulating performance are also known.

Such heat-reflecting glasses comprise an ordinary glass plate and, formed on a surface thereof, a coating film such as a multilayered film comprising tin oxide and chromium metal or a multilayered film of titanium oxide or nitride. In these heat-reflecting glasses, the light interference effect of the coating film is utilized to heighten the reflectance on the surface. Namely, the heat-reflecting glasses serve to thus reflect solar energy and inhibit the inflow of solar radiation energy into buildings, motor vehicles, or other vehicles.

Use of silicon as such a coating material has been proposed. For example, JP-B-7-29402 (the term "JP-B" as used herein means an "examined Japanese patent publication") discloses a silicon-coated glass which has enhanced reflectivity due to the high refractive index of the coating film and is capable of inhibiting the inflow of solar radiation energy into the room.

Such heat-reflecting glasses attain a high infrared-shielding effect due to the heightened reflectance. However, there is a problem that high visible light reflectance results in glittering reflections of sunlight, which constitutes a nuisance to the neighborhood buildings and houses.

Of other coating films, the multilayered films comprising, e.g., chromium metal show insufficient adhesion to the substrate and have so poor weatherability that they are apt to deteriorate in the air by the action of heat, light, moisture, gas, etc. Namely, none of those conventional coating films has a sufficient life.

Further, where window glasses having an electroconductive coating film, e.g., a layer of a metal such as silver or a tin oxide layer, are used, there is a problem that these window glasses reflect electromagnetic television waves or the like to cause the so-called ghost phenomenon.

### SUMMARY OF THE INVENTION

Accordingly, one object of the present invention is to provide a heat-reflecting glass which has low visible light reflectivity and high infrared-shielding properties and is free from drawbacks of prior art techniques, such as a reflected light nuisance to the neighborhood, low weatherability, and electromagnetic wave reflectivity.

Another object of the present, invention is to provide a double-glazing unit using the heat-reflecting glass.

The present invention has been achieved to eliminate the above-described problems.

According to one embodiment of the present invention, there is provided a heat-reflecting glass comprising a glass plate consisting essentially of, in % by weight,
basic glass compositions comprising
   65 to 80% SiO₂,
   0 to 5% Al₂O₃,
   0 to 5% B₂O₃,
   0 to 10% MgO,
   5 to 15% CaO,
   10 to 18% Na₂O,
   0 to 5% K₂O,
   5 to 15% MgO+CaO and
   10 to 20% Na₂O+K₂O, and
coloring components comprising
   0.40 to 1.30% total iron oxide in terms of Fe₂O₃, wherein the ratio of the amount of FeO in terms of Fe₂O₃ to the amount of total iron oxide in terms of Fe₂O₃ is from 0.2 to 0.35,
   0 to 0.85% TiO₂, and
   0 to 20 ppm CoO,
and at least one layer of a coating film mainly comprising silicon, formed on one of two main surfaces thereof, said heat-reflecting glass having a visible light reflectance of 25% or lower when examined with the CIE standard illuminant C from the uncoated side of the glass plate and giving a greenish reflected color tone when viewed from the uncoated side of the glass plate.

A preferred embodiment of the above heat-reflecting glass is the heat-reflecting glass which has a visible light reflectance of 20% or lower when examined with the CIE standard illuminant C from the uncoated side of the glass plate and giving a greenish reflected color tone when viewed from the uncoated side of the glass plate.

According to another embodiment of the present invention, there is provided a heat-reflecting glass comprising a glass plate consisting essentially of, in % by weight,
basic glass compositions comprising
   65 to 80% SiO₂,
   0 to 5% Al₂O₃,
   0 to 5% B₂O₃,
   0 to 10% MgO,
   5 to 15% CaO,
   10 to 18% Na₂O,
   0 to 5% K₂O,
   5 to 15% MgO+CaO, and
   10 to 20% Na₂O+K₂O and
coloring components comprising
   0.15 to 0.25% total iron oxide in terms of Fe₂O₃, wherein the ratio of the amount of FeO in terms of Fe₂O₃ to the amount of total iron oxide in terms of Fe₂O₃ is from 0.2 to 0.3,
   8 to 25 ppm Se, and
   12 to 50 ppm CoO.
and at least one layer of a coating film mainly comprising silicon, formed on one of two main surfaces thereof, said heat-reflecting glass having a visible light reflectance of 15% or lower when examined with the CIE standard illuminant C from the uncoated side of the glass plate and giving a bronzy reflected color tone when viewed from the uncoated side of the glass plate.

According to still another embodiment of the present invention, there is provided a heat-reflecting glass comprising a glass plate consisting essentially of, in % by weight,
basic glass compositions comprising
   65 to 80% SiO₂,
   0 to 5% Al₂O₃,
   0 to 5% B₂O₃,
   0 to 10% MgO,
   5 to 15% CaO,
   10 to 18% Na₂O,
   0 to 5% K₂O,
   5 to 15% MgO+CaO, and
   10 to 20% Na₂O+K₂O and
coloring components comprising
   0.15 to 0.25% total iron oxide in terms of Fe₂C₃, wherein the ratio of the amount of FeO in terms of Fe₂O₃ to the amount of total iron oxide in terms of Fe₂O₃ is from 0.2 to 0.3,
   5 to 23 ppm Se, and
   14 to 60 ppm CoO.
and at least one layer of a coating film mainly comprising silicon, formed on one of two main surfaces thereof, said heat-reflecting glass having a visible light reflectance of 15% or lower when examined with the CIE standard illuminant C from the uncoated side of the glass plate and giving a grayish reflected color tone when viewed from the uncoated side of the glass plate.

Preferred embodiments of the above three heat-reflecting glasses are as follows.

The heat-reflecting glass wherein a thin film having a refractive index of from 1.8 to 2.6 and a thickness of from 20 to 120 nm is formed between the glass plate and the coating film.

The above heat-reflecting glass wherein the thin film comprises tin oxide or titanium oxide.

The heat-reflecting glass wherein a thin film having a refractive index of from 1.45 to 2.6 and a thickness of from 10 to 100 nm is formed on the coating film.

The above heat-reflecting glass wherein the thin film comprises silicon oxide, tin oxide or titanium oxide.

The heat-reflecting glass wherein the coating film is formed on the glass plate surface and the thin film is formed on the glass plate surface and/or the coating film, by a pyrolytic method.

According to further embodiment of the present invention, there is provided a double-glazing unit which comprises two glass plates disposed so as to face each other and separated by an air layer, inert gas layer or vacuum layer formed by sealing the edges of the glass plates, at least one of the glass plates comprising the above-described heat-reflecting glass.

A preferred embodiment of the above double-glazing unit is that the heat-reflecting glass is used as an outdoor-side glass plate, and the coating film formed on a surface of the heat-reflecting glass faces the air, inert gas or vacuum layer.

According to the present invention, low visible light reflectivity is realized by using a regulated film constitution while utilizing the high infrared-shielding and insulating properties of silicon, and highly durable glasses are obtained by forming the coating film by a pyrolytic method. Moreover, the present invention is characterized in that glasses which are excellent in infrared-shielding properties and appearance and respectively give greenish, bronzy and grayish reflected color tones can be realized by regulating the coloring components of the substrate glass.

Furthermore, a double-glazing unit having higher heat-shielding performance is obtained by applying any of these heat-reflecting glasses to a double-glazing unit structure.

By thus regulating both the coloring components of the substrate glass and the film constitution, an heat-reflecting glass can be obtained which has such low visible light reflectivity that its visible light reflectance is 25% or lower, preferably 20% or lower, in the case of giving a greenish reflected color tone, and is 15% or lower in the case of giving a bronzy or grayish reflected color tone.

By using this heat-reflecting glass as at least one of the glass plates of a double-glazing unit, higher solar heat shielding performance can be imparted to the double-glazing unit.

### BRIEF DESCRIPTION OF THE DRAWINGS

Fig. 1 is an enlarged sectional view of a heat-reflecting glass according to the present invention.
Fig. 2 is an enlarged sectional view of a heat-reflecting glass obtained in Example 1.
Fig. 3 is a view illustrating one embodiment of the double-glazing unit containing a heat-reflecting glass according to the present invention.

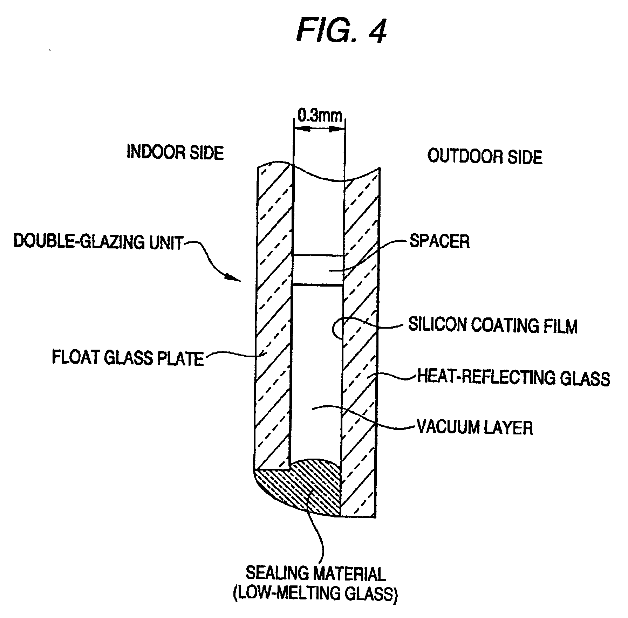

Fig. 4 is a view illustrating another embodiment of the double-glazing unit using a heat-reflecting glass according to the present invention.

### [Description of Symbols]

- 1: Glass plate
- 2: Silicon film

### DETAILED DESCRIPTION OF THE INVENTION

The glass substrates for use in the present invention are made of a glass which comprises basic glass compositions for a soda-lime silicate glass and coloring components. Where the glass substrate is intended to have a greenish tone, the glass contains, as the coloring components, from 0.40 to 1.30 wt% total iron oxide in terms of Fe₂O₃, wherein the amount of FeO in terms of Fe₂O₃ is from 20 to 35 wt% of the total iron oxide amount in terms of Fe₂O₃, from 0 to 0.85 wt% TiO₂, and from 0 to 20 ppm CoO. Where the glass substrate as intended to have a bronzy tone, the glass contains, as the coloring components, from 0.15 to 0.25 wt% total iron oxide in terms of Fe₂O₃, wherein the amount of FeO in terms of Fe₂O₃ is from 20 to 30 wt% of the total iron oxide amount in terms of Fe₂O₃, from 8 to 25 ppm Se, and from 12 to 50 ppm CoO. Where the glass substrate is intended to have a grayish tone, the glass contains, as the coloring components, from 0.15 to 0.25 wt% total iron oxide in terms of Fe₂O₃, wherein the amount of FeO in terms of Fe₂O₃ is from 20 to 30 wt% of the total iron oxide amount in terms of Fe₂O₃, from 5 to 23 ppm Se, and from 14 to 60 ppm CoO.

The reasons for limitations of the composition of the glass substrate for use in the present invention are explained below. Hereinafter, all percents used for indicating component amounts are by weight.

SiO₂ is the main component forming a glass skeleton. If the content of SiO₂ is lower than 65%, the glass has reduced durability. If the content thereof exceeds 80%, the glass is difficult to melt. Consequently, the content of SiO₂ should be from 65 to 80%.

Al₂O₃, which is not an essential ingredient, serves to improve the durability of the glass. If the content of Al₂O₃ exceeds 5%, the glass is difficult to melt. Consequently, the content of Al₂O₃ should be 5% or lower, and is preferably from 0.1 to 2%.

B₂O₃, which is not an essential ingredient, is used for improving the durability of the glass and also as a melting aid. If the content thereof exceeds 5%, troubles arise in glass forming due to vaporization of B₂O₃, etc. Consequently, the content of B₂O₃ should be 5% or lower.

MgO and CaO are used for improving the durability of the glass and for regulating the devitrification temperature and viscosity of the glass during molding. If the content of MgO, which is not an essential ingredient, exceeds 10%, the glass has an elevated devitrification temperature. Consequently, the content of MgO should be 10% or lower. If the content of CaO is lower than 5% or exceeds 15%, the glass has an elevated devitrification temperature. Consequently the content of CaO should be from 5 to 15%. Furthermore, if the total content of MgO and CaO is lower than 5%, the glass has reduced durability. If the total content thereof exceeds 15%, the glass has an elevated devitrification temperature. Consequently, the total content of MgO and CaO should be from 5 to 15%.

Na₂O and K₂O are used as glass melting accelerators. If the content of Na₂O is lower than 10% or if the total content of Na₂O and K₂O is lower than 10%, the effect of melting acceleration is poor. If the content of Na₂O exceeds 18% or if the total content of Na₂O and K₂O exceeds 20%, the glass has reduced durability. Therefore, the content of Na₂O should be from 10 to 18%, and the total content of Na₂O and K₂O should be 10 to 20%. The proportion of K₂O, which is not an essential ingredient, should be 5% or lower because it necessitates a higher material cost than Na₂O.

In the glass, iron oxide is present in the forms of Fe₂O₃ and FeO. If the total iron oxide content in terms of Fe₂O₃ is below 0.15%, the effect of absorbing ultraviolet and infrared rays is low and a high visible light transmittance results. On the other hand, total contents thereof exceeding 1.30% are undesirable in that during melting, an upper part of the molten glass heats up excessively due to the heat-absorbing effect of FeO, leading to a fear that the resulting radiant heat may raise the temperature of the ceiling bricks of the melting furnace to a temperature above the heat-resistant temperature thereof and the ceiling bricks may thus begin to melt. Consequently, the total iron oxide content in terms of Fe₂O₃ should be from 0.15 to 1.30%. Within this range, there are preferred ranges of the total iron oxide content in terms of Fe₂O₃ for respective glass plate colors. Specifically, the total content thereof for a greenish tint is preferably from 0.40 to 1.30%, that for a bronzy tone is preferably from 0.15 to 0.25% and that for a grayish tone is preferably from 0.15 to 0.25%.

In order to obtain a glass plate showing desired total solar energy absorption and visible light absorption and having either of the desired tones, the ratio of (the amount of FeO in terms of Fe₂O₃) to (the amount of total iron oxide in terms of Fe₂O₃) is preferably regulated to 0.2 to 0.35 for a greenish tone and 0.2 to 0.3 for a bronzy tone and a grayish tone while maintaining the total iron oxide content within the above range. Values of that ratio exceeding 0.35 are undesirable in that the absolute amount of FeO is too large and the temperature of ceiling bricks of the glass melting furnace increases excessively. On the other hand, values of that ratio smaller than 0.2 are undesirable in that the glass has a reduced heat absorbing effect.

TiO₂ in the glass is an ingredient which absorbs ultraviolet rays, although not essential. It further absorbs visible light and thus functions to reduce visible light reflectance. It is therefore preferred to add TiO₂ as a coloring ingredient especially for greenish glasses. However, if the concentration of TiO₂ exceeds 0.85%, the glass excessively absorbs visible rays having shorter wavelengths and hence has not the desired color tone but a yellowish tone. Consequently, the content of TiO₂ in the glass composition for use in the present invention should be 0.85% or lower.

CoO contributes to obtaining a greenish color tone when coexistent with TiO₂ and further serves to reduce visible light transmittance. As described above, the color of the glass changes from green to yellowish green or yellow as the addition amount of TiO₂ increases. This color change of the glass toward yellow by the addition of TiO₂ can be inhibited by adding CoO. However, CoO concentrations exceeding 20 ppm are undesirable in that the glass changes to a bluish tone. Consequently, the concentration of CoO for obtaining a greenish tone should be 0 to 20 ppm.

CoO is an ingredient which, when coexistent with Se, serves to impart a bronzy to grayish tone. The content of CoO is preferably from 12 to 50 ppm for obtaining a bronzy tone and from 14 to 60 ppm for obtaining a grayish tone. If the content of CoO is lower than each lower limit, the desired color tone cannot be obtained. If the content thereof exceeds each upper limit, the glass plate has an excessively reduced visible light transmittance.

Se is an ingredient for obtaining a bronzy or grayish tone due to its pink coloration in combination with the complementary color of CoO. The content of Se is preferably from 8 to 25 ppm for obtaining a bronzy tone and from 5 to 23 ppm for obtaining a grayish tone. If the content of Se is lower than each lower limit, the desired color tone cannot be obtained. If the content thereof exceeds each upper limit, the glass plate has an excessively reduced visible light transmittance.

The glass having a composition within the range according to the present invention may contain NiO and Cr₂O₃ for the purpose of color tone regulation and may further contain CeO₂ as an ultraviolet absorbing ingredient.

NiO is an ingredient for obtaining a grayish color tone. However, too high NiO concentrations result in a reduced visible light transmittance. Consequently, the content of NiO is preferably up to 0.005%.

Cr₂O₃ is an ingredient for obtaining a greenish color tone. However, from the standpoint of glass meltability, the content of Cr₂O₃ is preferably up to 0.5%, more preferably up to 0.05%.

CeO₂ is an ultraviolet absorbing ingredient. However, CeO₂ concentrations exceeding 1.0% are undesirable in that the class excessively absorbs visible rays having shorter wavelengths and hence has not the desired greenish tone but a yellowish tone, and that particularly in a bronzy or grayish tone glass, coloration efficiency of Se tends to lower due to oxidation force of CeO₂, thereby making it difficult to obtain the desired tone. Further, high CeO₂ concentrations increase the cost of glass production. Consequently, the content of CeO₂ is preferably up to 1.0%.

Furthermore, the glass having a composition within the range according to the present invention may contain at least one of ZnO, MnO, V₂O₅, and MoO₃ in a total amount of up to 1% and sulfur in an amount of up to 1% in terms of SO₃, as long as these ingredients are not counter to the spirit of the invention.

ZnO has the effect of preventing the generation of nickel sulfide, which is apt to generate during glass melting in a reducing atmosphere and is causative of spontaneous breakage.

MnO, V₂O₅, and MoO₃ in the glass each serves as an ultraviolet absorbing ingredient. They can be used also for the fine control of a bronze to neutral grayish tone according to their degree of ultraviolet absorption.

SO₃ is an ingredient which comes into the glass mainly from a sulfuric acid salt or the like used as a refining agent. When added in a proper amount, SO₃ accelerates the melting and refining of the glass.

The infrared-shielding performance of each of the glass substrates respectively having the compositions described above is enhanced by forming thereon a coating film mainly comprising silicon. The thickness of the silicon coating film in the present invention is determined according to the desired infrared-shielding performance attributable to visible light reflection and the desired color tone of reflected light and reflectance with respect to light incident from the uncoated side of the glass plate. The preferred range of the thickness thereof is from 10 to 50 nm.

The reflectance of the glass plate with respect to light incident thereon from the uncoated side thereof can be reduced by forming, between the glass plate and the silicon coating film, a thin film having a refractive index of from 1.8 to 2.6, which is an intermediate refractive index between that of the soda-lime glass and that of silicon, in a thickness of from 20 to 120 nm; forming a thin film having a refractive index of from 1.45 to 2.6 and a thickness of from 10 to 100 nm on the silicon coating film; or forming the film having a refractive index of from 1.8 to 2.6 and a thickness of from 20 to 120 between the glass plate and the silicon coating film and then forming the thin film having a refractive index of from 1.45 to 2.6 and a thickness of from 10 to 100 nm on the silicon coating film.

Examples of the material of the thin film having a refractive index of from 1.8 to 2.6, which is an intermediate refractive index between that of the soda-lime glass and that of silicon, formed between the glass plate and the silicon coating film include tin oxide, indium oxide, zinc oxide and titanium oxide. It is, however, preferred to use tin oxide or titanium oxide form the standpoints of transparency, durability, ease of film deposition by CVD, which is a preferred film deposition technique as will be explained later, and the availability of appropriate raw materials.

The thickness of the thin film formed between the glass plate and the silicon coating film varies depending on the refractive index of the thin and the desired color of reflected light. The preferred range of the film thickness in the case of using tin oxide is from 40 to 120 nm, while that in the case of using titanium oxide is from 20 to 50 nm. Before tin oxide or titanium oxide is deposited on a glass to from the above thin film, silicon oxide may be deposited to form an alkali barrier layer as long as this barrier layer does not adversely influence optical properties including reflectance and transmittance. This silicon oxide layer preferably has a thickness in the range of about from 10 to 30 nm.

Examples of the material of the thin film having a refractive index of from 1.45 to 2.6 and a thickness of from 10 to 100 nm formed on the silicon coating film include silicon oxide, silicon oxide containing carbon and nitrogen, aluminum oxide, an oxide of metals mainly comprising silicon and aluminum, tin oxide, titanium oxide, zinc oxide and indium oxide. However, from the standpoints of durability including chemical resistance and abrasion resistance, transparency, and ease of film deposition by CVD, it is preferred to use any one of silicon oxide, silicon oxide containing carbon and nitrogen, tin oxide, and titanium oxide.

The kind of thin film to be formed depends on the film constitution and the refractive index of the thin film. Where a coating film is formed directly on the silicon film, this coating film is preferably made of tin oxide, silicon oxide, or titanium oxide. Where a coating film is further formed on the tin oxide or titanium oxide film formed on the silicon film, this coating film is desirably made of silicon oxide.

The thickness of the thin film directly formed on the silicon coating film is preferably in the range of from 10 to 70 nm in the case of tin oxide, from 40 to 100 nm in the case of silicon oxide, and from 10 to 50 nm in the case of titanium oxide. The thickness of the silicon oxide film formed on the tin oxide or titanium oxide film formed on the silicon coating film is preferably in the range of from 40 to 100 nm.

The oxide thin film directly formed on the silicon coating film serves not only to prevent the oxidation of the silicon coating film and improve the durability thereof but also to prevent the silicon coating film from being deteriorated by alkali ingredients released from the glass.

The oxide thin film directly coated on the silicon coating film may comprise two or more layers

Examples of film constitutions suitable for achieving these purposes include glass/tin oxide/silicon/tin oxide, glass/tin oxide/silicon/silicon oxide, glass/tin oxide/silicon/titanium oxide, glass/tin oxide/silicon/silicon oxide/tin oxide, glass/titanium oxide/silicon/silicon oxide/tin oxide, glass/silicon/silicon oxide/tin oxide/silicon oxide, glass/silicon oxide/silicon/silicon oxide/tin oxide/silicon oxide, and glass/tin oxide/silicon/tin oxide/silicon oxide.

Tin oxide can give an electroconductive film when deposited so as to contain fluorine or antimony and in a thickness of about 150 nm or larger. However, there is no need of adding these elements since an important factor in the above application is the refractive index of the coating film. Because of this and because the thickness of the tin oxide thin film is 120 nm or smaller in the present invention, the glass having this coating film does not show electrical conductivity which may exert an adverse influence on electromagnetic wave transmittance.

In the heat-reflecting glasses of the present invention, if the visible light reflectance of the glass plate, with respect to light incident thereon from the uncoated side thereof, exceeds 25% as a result of the formation of the coating films, the reflected light glitters to constitute a nuisance to the neighborhood. Consequently, the visible light reflectance of the heat-reflecting glasses as measured on the uncoated side of the glass plate is 25% or lower, Although the heat-reflecting glasses can have a reduced visible light reflectance with respect to light incident thereon from the uncoated side of the glass plate due to the formation of the coating films, the reflection of visible light can occur on the uncoated surface of the glass plate irrespective of the color tone of the glass. Specifically, the visible light reflectance on the uncoated-side surface of the glass plate is 4% at the most.

As described above, since the heat-reflecting glasses having different color tones of the present invention each has a visible light reflectance of 25% or lower with respect to light incident thereon from the uncoated side of the glass plate, they are inhibited from causing a reflected-light nuisance to the neighborhood, while showing heat radiation shielding performance.

Examples of methods for forming those thin films include physical methods such as vapor deposition in which metals or metal oxides are used, sputtering, and ion plating and chemical methods such as chemical vapor deposition (CVD) in which a gaseous metal compound is blown against a heated glass substrate to form a film, a spraying method in which droplets of a solution of a metal compound are blown against a heated glass plate, and a powder spraying method in which a powder comprising a metal compound is sprayed.

However, the physical film deposition methods have a problem that a highly durable coating film is difficult to obtain although the methods are excellent in evenness of film thickness. Furthermore, the physical methods are less suitable for mass production because they necessitate a procedure in which cut glass plates are washed and then subjected to film deposition in a vacuum apparatus. The chemical methods are superior also in suitability for size increase in glass substrates.

Of the chemical methods, the spraying method has a drawback that itis difficult to obtain a coating film of a material which is not an oxide, as in the case of forming a silicon film in the present invention, although it has an advantage that film deposition can be conducted at low cost because of the simplicity of the method. Another drawback of the spraying method is that evenness of film thickness is difficult to obtain because the control of sprayed droplets and the control of reaction products and products to be discharged, including undecomposed products, are difficult. Furthermore, use of the spraying method results in considerable glass distortion. Therefore, CVD is preferred from a comprehensive standpoint.

A general technique for forming a film of a metal oxide by CVD comprises heating a cut glass and blowing a gaseous compound of the metal against the glass to deposit a metal oxide film thereon. Recently, however, such glass plates coated with various thin films have come to be required to have larger sizes for use as, e.g., window glasses for buildings.

However, if the CVD technique is used in such a manner that a cut glass plate having such a large area is heated before a gaseous metal compound is blown thereagainst to form a film, this process is disadvantageous in that a step for the reheating as additionally required and a larger quantity of energy is necessary for heating. Consequently, from the standpoints of production cost, quality, etc., a desirable method in obtaining a heat-reflecting glass having a large area is to continuously form a film by CVD on a glass ribbon which is kept at a high temperature by utilizing the heat energy applied for glass forming.

Furthermore, by conducting this CVD technique within the space over the tin float bath, the defects generally called pinholes may be diminished. Film deposition may also be conducted in such a manner that a silicon coating film or the like is formed by CVD and a coating film of a metal oxide, e.g., tin oxide or titanium oxide, is formed thereon by the spraying method.

Examples of silicon materials for a silicon coating film to be formed by CVD include monosilane, disilane, trisilane, monochlorosilane, dichlorosilane, 1,2-dimethylsilane, 1,1,2-trimethyldisilane, and 1,1,2;2-tetramethyldisilane. A gas of an unsaturated hydrocarbon such as, e.g., ethylene, acetylene, or toluene may be added for the purposes of improving the alkali resistance of the silicon coating film and regulating the refractive index of the film.

Examples of silicon materials for silicon oxide to be deposited by CVD include monosilane, disilane, trisilane, monochlorosilane, dichlorosilane, 1,2-dimethylsilane, 1,1,2-trimethyldisilane, and 1,1,2,2-tetramethyldisilane. Examples of oxidizing agents include oxygen, water vapor, dry air, carbon dioxide, carbon monoxide, and nitrogen dioxide. A gas of an unsaturated hydrocarbon such as, e.g., ethylene, acetylene, or toluene may be added for the purposes of preventing a silane used as a silicon material from oxidizing before it reaches the glass surface, and of regulating the refractive index of the silicon oxide film to be obtained.

Examples of aluminum materials for aluminum oxide include trimethylaluminum, aluminum triisopropoxide, diethylaluminum chloride, aluminum acetylacetonate, and aluminum chloride.

Examples of titanium materials for titanium oxide to be deposited by CVD include titanium tetrachloride and titanium isopropoxide.

Examples of tin compound materials usable in CVD include tin tetrachloride, dimethyltin dichloride, dibutyltin dichloride, tetrabutyltin, tetramethyltin, dioctyltin dichloride, and monobutyltin trichloride. Examples of oxidizing agents for obtaining tin oxide include oxygen, water vapor, and dry air. Fluorine, antimony, or the like may be incorporated into the tin oxide as long as these additive ingredients do not excessively increase the electrical conductivity of the tin oxide. Examples of fluorine materials for use in the fluorine incorporation include hydrogen fluoride, trifluoroacetic acid, bromotrifluoromethane, and chlorodifluoromethane. Examples of antimony materials for use in the antimony incorporation include antimony pentachloride and antimony trichloride.

Examples of titanium materials usable in the spraying method include titanium tetrachloride, titanium tetraethoxide, acetylacetone titanyl, titanous sulfate, titanic sulfate, titanium tetrabutoxide, titanium isopropoxide, titanium methoxide, titanium diisopropoxybisoctylene glycoxide, titanium di-n-propoxybisoctylene glycoxide, titanium (diisopropoxymonooctylene glycoxy)acetylacetonate, titanium (di-n-butoxymonooctylene glycoxy)acetylacetonate, titanium tetraoctylene glycoxide, and titanium di-n-propoxybisacetylacetonate.

Examples of tin materials usable in the spraying method include tin tetrachloride, dibutyltin dichloride, tetrabutyltin, dioctyltin dichloride, dimethyltin dichloride, tetraoctyltin, dibutyltin oxide, dibutyltin dilaurate, dibutyltin fatty acids, monobutyltin fatty acids, monobutyltin trichloride, dibutyltin diacetate, dioctyltin diacetate, and dioctyltin dilaurate.

Besides the elements described above, other elements may be suitably added in such an amount as not to result in an excessively high sheet resistivity. Examples of such optional elements include silicon, aluminum, zinc, copper, indium, bismuth, gallium, boron, vanadium, manganese, zirconium, cobalt, iron, chromium, nickel, copper, antimony, and zirconium.

Possible examples of the double-glazing unit include one in which the two glass plates are disposed apart at a distance of about from 5 to 6 mm to form therebetween an air layer or a layer of an inert gas, e.g., argon, and further include one in which the two glass plates are disposed apart at a distance of 1 mm or shorter to form therebetween a vacuum layer having a pressure of from 10⁻² to 10⁻⁴ Torr.

In the ease of using any of the heat-reflecting glasses of the present invention to fabricate a double-glazing unit having the constitution described above, this double-glazing unit is preferably fabricated in such a manner that at least the outer-side glass plate is the heat-reflecting glass and that the at least one silicon coating film formed on one surface of the heat-reflecting glass faces the air layer, layer of an inert gas, e.g., argon, or vacuum layer.

According to this constitution, solar energy is absorbed by the heat-reflecting glass, disposed as the outer-side glass plate, which uses a glass substrate containing iron which has been regulated with respect to amount and valence. The absorbed solar energy is shielded by the at least one silicon coating film formed on that side of the heat-reflecting glass which faces the air layer, layer of an inert gas, e.g., argon, or vacuum layer. Furthermore, the air layer, layer of an inert gas, e.g., argon, or vacuum layer formed between the heat-reflecting glass and the indoor-side glass plate reduces the transmittance of the solar energy. Thus, the inflow of solar energy into the room is inhibited.

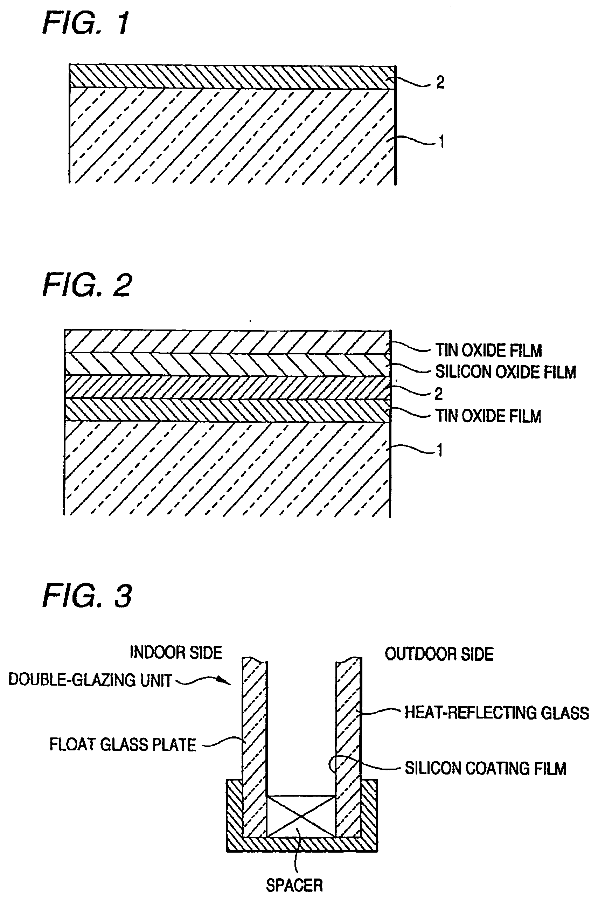

Embodiments of the present invention will be explained below by reference to the accompanying drawings, etc. Fig. 1 is an enlarged sectional view of a heat-reflecting glass according to the present invention. This heat-reflecting glass comprises a glass plate 1 and a silicon film 2 formed on one of two main surfaces thereof.

Fig. 2 is an enlarged sectional view of a heat-reflecting glass obtained in Example 1. This heat-reflecting glass comprises a glass plate 1, a tin oxide thin film formed on one of two main surface of the glass plate 1, a silicon coating film 2 formed on the tin oxide coating film, an silicon oxide thin film formed on the silicon thin film and a tin oxide thin film formed on the silicon oxide thin film.

The present invention will be explained below in more detail by reference to the following Examples and Comparative Examples.

### EXAMPLES 1 AND 2

Ferric oxide, cobalt oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a green glass plate having a thickness of about 8mm. This glass plate was polished so as to have a thickness of 6 mm.

Subsequently, this glass plate was washed and dried. The dried glass plate was placed on the mesh belt of an open type conveying furnace and passed through a heating furnace to heat it to about 570°C. On this heated glass plate was formed a tin oxide coating film using a mixed gas composed of monobutyltin trichloride gas, oxygen, water vapor and nitrogen. This coated glass was placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film, and the coated glass plate was cooled gradually.

The open type conveying furnace was used again to heat the glass plate to about 570°C. During this heating, the silicon surface was oxidized to give silicon oxide. Thereafter, a mixed gas composed of monobutyltin trichloride gas, oxygen, water vapor and nitrogen was used to form a tin oxide coating film.

Metal contents and optical properties of each glass plate obtained and the color of light reflected by the glass plate are shown in Table 1. The optical properties, i.e., visible light transmittance, solar energy transmittance and visible light reflectance, were measured in accordance with JIS R3106-1985 from the uncoated side of the glass plate. The color of reflected light also was determined through examination from the uncoated side of the glass plate.

### EXAMPLE 3

A glass plate having a thickness of 6 mm was obtained in the same manner as in Example 1.

This glass plate was washed and dried. The dried glass plate was placed on the mesh belt of an open type conveying furnace and passed through a heating furnace to heat it to about 570°C. On this heated glass plate was formed a titanium oxide coating film using a mixed gas composed off titanium isopropoxide gas, oxygen and nitrogen.

Subsequently, this coated glass plate was placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film, and the coated glass plate was cooled gradually.

The open type conveying furnace was used again to heat the glass plate to about 570°C. During this heating, the silicon surface was oxidized to give silicon oxide Thereafter, a mixed gas composed of monobutyltin trichloride gas, oxygen, water vapor and nitrogen was used to form a tin oxide coating film.

Metal contents and optical properties of the glass plate obtained and the color of light reflected by the glass plate are shown in Table 1. The optical properties were measured in the same manner as in Example 1.

### EXAMPLES 4 AND 5

A glass plate having a thickness of 6 mm was obtained in the same manner as in Example 1.

This glass plate was washed, dried and then placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film, and the coated glass plate was cooled gradually.

An open type conveying furnace was used to heat the coated glass plate to about 570°C. During this heating, the silicon surface was oxidized to give silicon oxide. Thereafter, a mixed gas composed of monobutyltin trichloride gas, oxygen, water vapor and nitrogen was used to form a tin oxide coating film.

The open type conveying furnace was used again to heat this glass plate to about 570°C, and a mixed gas composed of monosilane, oxygen and nitrogen was used to form a silicon oxide coating film.

Metal contents and optical properties of each glass plate obtained and the color of light reflected by the glass plate are shown in Table 1. The optical properties were measured in the same manner as in Example 1.

### EXAMPLES 6 AND 7

A glass plate having a thickness of 6 mm was obtained in the same manner as in Example 1.

This glass plate was washed and dried. The dried glass plate was placed on the mesh belt of an open type conveying furnace and passed through a heating furnace to heat it to about 570°C. On this heated glass plate was formed a tin oxide coating film using a mixed gas composed of monobutyltin trichloride gas, oxygen, water vapor and nitrogen.

Subsequently, this coated glass plate was placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film. The furnace was then evacuated again with a vacuum pump and the chamber was filled with nitrogen. The coated glass plate was heated to about 570°C, and a mixed gas composed of monobutyltin trichloride gas, oxygen, water vapor and nitrogen was used to form a tin oxide coating film.

Metal contents and optical properties of each glass plate obtained and the color of light reflected by the glass plate are shown in Table 1. The optical properties were measured in the same manner as in Example 1.

### EXAMPLE 8

A glass plate having a thickness of 6 mm was obtained in the same manner as in Example 1.

This glass plate was washed and dried. The dried glass plate was placed on the mesh belt of an open type conveying furnace and passed through a heating furnace to heat it to about 570°C. On this heated glass plate was formed a tin oxide coating film using a mixed gas composed of monobutyltin trichloride gas, oxygen, water vapor and nitrogen.

Subsequently, this coated glass plate was placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film. The furnace was then evacuated again with a vacuum pump and the chamber was filled with nitrogen. The coated glass plate was heated to about 570°C, and a mixed gas composed of monosilane, ethylene, oxygen and nitrogen was used to form a silicon oxide coating film.

Metal contents and optical properties of the glass plate obtained and the color of light reflected by the glass plate are shown in Table 1. The optical properties were measured in the same manner as in Example 1.

### EXAMPLE 9

A glass plate having a thickness of 6 mm was obtained in the same manner as in Example 1.

This glass plate was washed and dried. The dried glass plate was placed on the mesh belt of an open type conveying furnace and passed through a heating furnace to heat it to about 570°C. On this heated glass plate was formed a tin oxide coating film using a mixed gas composed of monobutyltin trichloride gas, oxygen, water vapor and nitrogen.

Subsequently, this coated glass plate was placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film. The furnace was then evacuated again with a vacuum pump and the chamber was filled with nitrogen. The coated glass plate was heated to about 570°C, and a mixed gas composed of monobutyltin trichloride gas, oxygen, water vapor and nitrogen was used to form a tin oxide coating film.

Thereafter, the furnace was evacuated again with a vacuum pump and the chamber was filled with nitrogen. The glass was heated to about 570°C, and a mixed gas composed of monosilane, ethylene, oxygen, and nitrogen was used to form a silicon oxide coating film.

Metal contents and optical properties of the glass plate obtained and the color of light reflected by the glass plate are shown in Table 1. The optical properties were measured in the same manner as in Example 1.

### EXAMPLE 10

Ferric oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a green glass plate having a thickness of about 8 mm. This glass plate was polished so as to have a thickness of 6 mm.

Subsequently, this glass plate was washed and dried, and was then coated in the same manner as in Example 7.

Metal contents and optical properties of the glass plate obtained and the color of light reflected by the glass plate are shown in Table 1. The optical properties were measured in the same manner as in Example 1.

### EXAMPLE 11

Ferric oxide, titanium oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a green glass plate having a thickness of about 8mm. This glass plate was polished so as to have a thickness of 6 mm.

Subsequently, this glass plate was washed and dried, and was then coated in the same manner as in Example 7.

Metal contents and optical properties of the glass plate obtained and the color of light reflected by the glass plate are shown in Table 1. The optical properties were measured in the same manner as in Example 1,

### EXAMPLE 12

Ferric oxide, selenium metal, cobalt oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a bronze glass plate having a thickness of about 8 mm. This glass plate was polished so as to have a thickness of 6 mm.

Subsequently, this glass plate was washed and dried, and was then coated in the same manner as in Example 1.

Metal contents and optical properties of the glass plate obtained and the color of light reflected by the glass plate are shown in Table 1. The optical properties were measured in the same manner as in Example 1.

### EXAMPLE 13

Ferric oxide, Selenium metal, cobalt oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a gray glass plate having a thickness of about 8 mm. This glass plate was polished so as to have a thickness of 6 mm.

Subsequently, this glass plate was washed and dried, and was then coated in the same manner as in Example 7.

Metal contents, with respect to coloring components, and optical properties of the glass plate obtained and the color of light reflected by the glass plate are shown in Table 1. The optical properties were measured in the same manner as in Example 1.

### COMPARATIVE EXAMPLE 1

Ferric oxide, cobalt oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a green glass plate having a thickness of about 8mm. This glass plate was polished so as to have a thickness of 6 mm.

Subsequently, this glass plate was washed, dried and then placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film, and the coated glass plate was cooled gradually.

An open type conveying furnace was used to heat the glass plate again to about 570°C. During this heating, the silicon surface was oxidized to give silicon oxide. Thereafter, a mixed gas composed of monobutyltin trichloride gas, oxygen, water vapor and nitrogen was used to form a tin oxide coating film.

Metal contents and optical properties of the glass plate obtained, and the color of light reflected by the glass plate are shown in Table 1. The optical properties were measured in the same manner as in Example 1.

### COMPARATIVE EXAMPLE 2

Ferric oxide, cobalt oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a green glass plate having a thickness of about 8 mm. This glass plate was polished so as to have a thickness of 6 mm.

Subsequently, this glass plate was washed, dried and then placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film, and the coated glass plate was cooled gradually.

The furnace was then evacuated again with a vacuum pump and the chamber was filled with nitrogen. The coated glass plate was heated to about 570°C and a mixed gas composed of monobutyl tin trichloride gas, oxygen, water vapor and nitrogen was used to form a tin oxide coating film.

Metal contents and optical properties of the glass plate obtained and the color of light reflected by the glass plate are shown in Table 1. The optical properties were measured in the same manner as in Example 1.

### COMPARATIVE EXAMPLE 3

Ferric oxide, cobalt oxide and a carbonaceous reducing agent were suitably mixed with typical soda-lime silicate glass batch materials. This batch was melted by heating to 1,500°C in an electric furnace. The batch was kept molten for 4 hours, and the resulting molten glass was cast on a stainless-steel plate and annealed to obtain a green glass plate having a thickness of about 8mm. This glass plate was polished so as to have a thickness of 6 mm.

Subsequently, this glass plate was washed, dried and then placed in a closed type furnace. The furnace was evacuated with a vacuum pump and the chamber was then filled with nitrogen, during which operation the glass plate was heated to about 600°C. Thereafter, a gas composed of monosilane and ethylene was used to form a silicon coating film, and the coated glass plate was cooled gradually.

The furnace was then evacuated again with a vacuum pump and the chamber was filled with nitrogen. The coated glass plate was heated to about 570°C, and a mixed gas composed of monosilane, ethylene, oxygen and nitrogen was used to form a silicon oxide coating film.

Metal contents and optical properties of the glass plate obtained, and the color of light reflected by the glass plate are shown in Table 1. The optical properties were measured in the same manner as in Example 1.

### EXAMPLE 14

A double-glazing unit was fabricated using the heat-reflecting glass obtained in Example 6 and a 6 mm thick glass plate made of a colorless and transparent soda-lime glass. In fabricating the double-glazing unit, aluminum spacers packed with a drying agent were disposed between the two glass plates along the edges thereof, and these glass plates and spacers wore bonded to each other with butyl rubber. In the double-glazing unit, the coated side of the heat-reflecting glass faced the air layer, which had a thickness of 6 mm. The double-glazing unit obtained had a visible light transmittance of 37.3% and a visible light reflectance of 19.7%, gave a greenish reflected color tone, and had a solar heat gain coefficient of 0.35. These properties were obtained through examinations of the pane from the coated-glass side. These optical properties were measured in the same manner as in Example 1.

### EXAMPLE 15

A double-glazing unit was fabricated in the same manner as in Example 14 using the heat-reflecting glass obtained in Example 11 and a 6 mm-thick glass plate made of a colorless and transparent soda-lime glass. The double-glazing unit obtained had a visible light transmittance of 37.7% and a visible light reflectance of 12.3%, gave a greenish reflected color tone, and had a solar heat gain coefficient of 0.31. These properties were obtained through examinations of the pane from the coated-glass side. These optical properties were measured in the same manner as in Example 1.

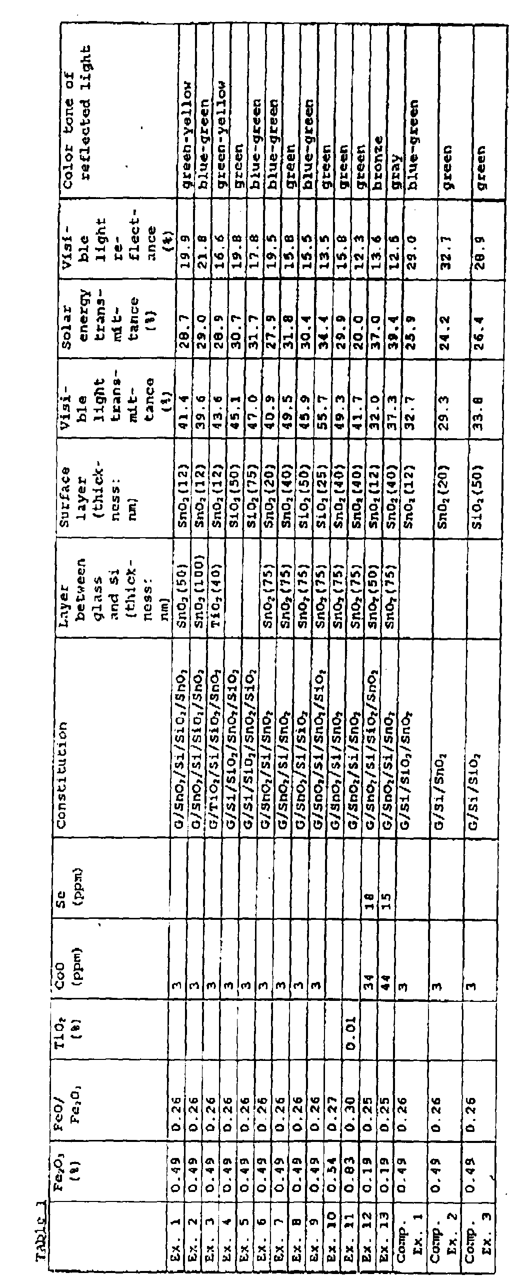

As described above in detail, heat-reflecting glasses are obtained according to the present invention which have a low visible light reflectance so as not to arouse troubles such as a reflected-light nuisance to the neighborhood, have high heat radiation shielding performance, and do not exert an adverse influence on electromagnetic wave transmission, and which, when viewed from their uncoated side, respectively give reflected lights of beautiful greenish, bronzy and grayish tones.

Furthermore, a double-glazing unit having higher heat radiation shielding performance is obtained by applying any of these heat-reflecting glasses to a double-glazing unit structure.

While the invention has been described in detail and with reference to specific embodiments thereof, it will be apparent to one skilled in the art that various changes and modifications can be made therein without departing from the spirit and scope thereof.

## Claims

1. A heat-reflecting glass comprising a glass plate consisting essentially of, in % by weight,
basic glass compositions comprising
65 to 80% SiO₂,
0 to 5% Al₂O₃,
0 to 5% B₂O₃,
0 to 10% MgO,
5 to 15% CaO,
10 to 18% Na₂O,
0 to 5% K₂O,
5 to 15% MgO+CaO and
10 to 20% Na₂O+K₂O, and
coloring components comprising
0.40 to 1.30% total iron oxide in terms of Fe₂O₃, wherein the ratio of the amount of FeO in terms of Fe₂O₃ to the amount of total iron oxide in terms of Fe₂O₃ is from 0.2 to 0.35,
0 to 0.85% TiO₂, and
0 to 20 ppm CoO.
and at least one layer of a coating film mainly comprising silicon, formed on one of two main surfaces of the glass plate, said heat-reflecting glass having a visible light reflectance of 25% or lower when examined with the CIE standard illuminant C from the uncoated side of the glass plate and giving a greenish reflected color tone when viewed from the uncoated side of the glass plate.

2. The heat-reflecting glass of claim 1, wherein said glass has a visible light reflectance of 20% or lower when examined with the CIE standard illuminant C from the uncoated side of the glass plate and giving a greenish reflected color tone when viewed from the uncoated side of the glass plate.

3. A heat-reflecting glass comprising a glass plate consisting essentially of, in % by weight,
basic glass compositions comprising
65 to 80% SiO₂,
0 to 5% Al₂O₃,
0 to 5% B₂O₃,
0 to 10% MgO,
5 to 15% CaO,
10 to 18% Na₂O,
0 to 5% K₂O,
5 to 15% MgO+CaO and
10 to 20% Na₂O+K₂O, and
coloring components comprising
0.15 to 0.25% total iron oxide in terms of Fe₂O₃, wherein the ratio of the amount of FeO in terms of Fe₂O₃ to the amount of total iron oxide in terms of Fe₂O₃ is from 0.2 to 0.3,
8 to 25 ppm Se, and
12 to 50 ppm CoO,
and at least one layer of a coating film mainly comprising silicon, formed on one of two main surfaces of the glass plate, said heat-reflecting glass having a visible light reflectance of 15% or lower when examined with the CIE standard illuminant C from the uncoated side of the glass plate and giving a bronzy reflected color tone when viewed from the uncoated side of the glass plate.

4. A heat-reflecting glass comprising a glass plate consisting essentially of, in % by weight,
basic glass compositions comprising
65 to 80% SiO₂,
0 to 5% Al₂O₃,
0 to 5% B₂O₃,
0 to 10% MgO,
5 to 15% CaO,
10 to 18% Na₂O,
0 to 5% K₂O,
5 to 15% MgO+CaO, and
10 to 20% Na₂O+K₂O and
coloring components comprising
0.15 to 0.25% total iron oxide in terms of Fe₂O₃, wherein the ratio of the amount of FeO in terms of Fe₂O₃ to the amount of total iron oxide in terms of Fe₂O₃ is from 0.2 to 0.3,
5 to 23 ppm Se, and
14 to 60 ppm CoO.
and at least one layer of a coating film mainly comprising silicon, formed on one of two main surfaces of the glass plate, said heat-reflecting glass having a visible light reflectance of 15% or lower when examined with the CIE standard illuminant C from the uncoated side of the glass plate and giving a grayish reflected color tone when viewed from the uncoated side of the glass plate.

5. The heat-reflecting glass of claim 1,3 or 4, wherein said glass has a thin film having a refractive index of from 1.8 to 2.6 and a thickness of from 20 to 120 nm between the glass plate and the coating film.

6. The heat-reflecting glass of claim 5, wherein the thin film comprises tin oxide or titanium oxide.

7. The heat-reflecting glass of claim 1, 3 or 4, wherein a thin film having a refractive index of from 1.45 to 2.6 and a thickness of from 10 to 100 nm is formed on the coating film.

8. The heat-reflecting glass of claim 7, wherein the thin film comprises at least one layer.

9. The heat-reflecting glass of claim 8, wherein the thin film comprises at least one of silicon oxide, tin oxide and titanium oxide.

10. The heat-reflecting glass of claim 5, wherein the coating turn and the thin film are formed on the glass plate surface and the coating film surface, respectively, by a pyrolytic method.

11. The heat-reflecting glass of claim 7, wherein the thin film is formed on the coating film by a pyrolytic method.

12. A double-glazing unit which comprises two glass plates disposed so as to face each other and separated by an air layer, inert gas layer, or vacuum layer formed by sealing the edges of the glass plates, at least one of the glass plates comprising the heat-reflecting glass of claim 1, 3 or 4.

13. The double-glazing unit of claim 12, wherein the heat-reflecting glass is used as an outdoor-side glass plate, and the coating film formed on a surface of the heat-reflecting glass faces the air, inert gas or vacuum layer.
